(19) Europäisches Patentamt / European Patent Office / Office européen des brevets

(11) EP 3 078 509 B1

(12) EUROPEAN PATENT SPECIFICATION

(45) Date of publication and mention
of the grant of the patent:
**24.10.2018  Bulletin 2018/43**

(21) Application number: **14873635.8**

(22) Date of filing: **11.12.2014**

(51) Int Cl.:
**B60C 15/06** (2006.01)

(86) International application number:
**PCT/JP2014/082892**

(87) International publication number:
**WO 2015/098554 (02.07.2015 Gazette 2015/26)**

(54) **PNEUMATIC TIRE**

LUFTREIFEN

PNEUMATIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **24.12.2013  JP 2013265789**

(43) Date of publication of application:
**12.10.2016  Bulletin 2016/41**

(73) Proprietor: **Sumitomo Rubber Industries, Ltd.
Kobe-shi, Hyogo 651-0072 (JP)**

(72) Inventor: **MIYAZAKI Shinichi
Kobe-shi
Hyogo 651-0072 (JP)**

(74) Representative: **Manitz Finsterwald Patentanwälte
PartmbB
Martin-Greif-Strasse 1
80336 München (DE)**

(56) References cited:
**JP-A- H09 300 921      JP-A- 2006 213 180
JP-A- 2006 213 180      JP-A- 2007 001 388
JP-A- 2013 244 929**

## Description

### Technical Field

The present invention relates to a pneumatic tire with a reinforced bead portion.

### Background Art

In recent years, in order to improve steering stability of tires, it has been requested to improve rigidity of a bead portion in view of situation where high power vehicles and low aspect tires are employed.

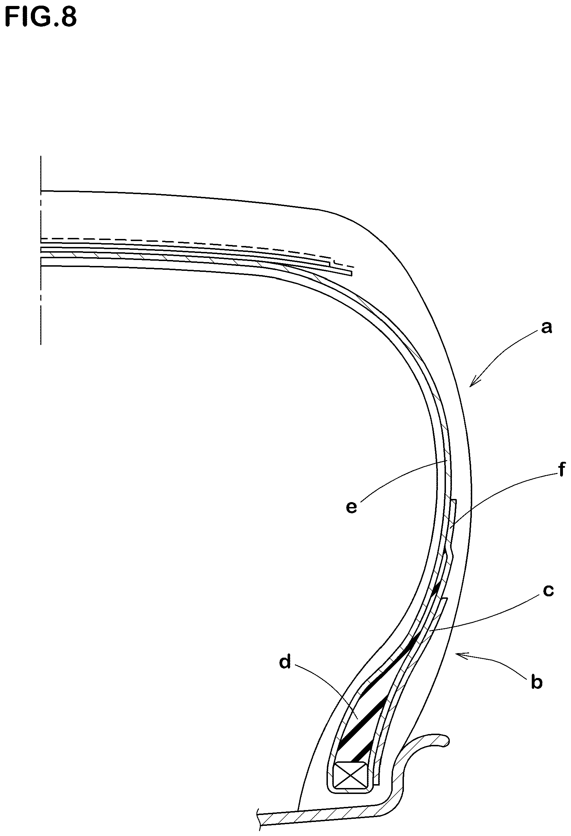

For example, as illustrated in FIG. 8, a pneumatic tire (a) having a bead portion (b) with a bead reinforcing layer (c) has been proposed. The bead reinforcing layer (c) is disposed axially outward of the bead apex rubber (d) along a turn-up portion (f) of a carcass ply (e). The bead reinforcing layer (c) improves durability as well as rigidity of the bead portion (b), thereby improving steering stability (see, the following Patent Document 1, for example).

Unfortunately, since such a bead reinforcing layer (c) causes to increase the number of members for molding a green tire, there is a problem that lowers the productivity. In particular, recent tire production has strong trend of small-volume production in great varieties. Therefore, providing a member of the bead reinforcing layer (c) for each tire size has been a factor which significantly deteriorates the productivity.

Furthermore, the bead reinforcing-layer (c) is disposed only axially outside of the bead apex rubber (d). Thus, it is difficult to say that the tension of the bead reinforcing layer (c) may effectively be utilizing, and there is a problem that it is difficult to obtain a sufficient bead reinforcing effect according to the weight gain of the bead reinforcing layer (c). JP 2006 213180 A and JP 2007 001388 A disclose a pneumatic tire according to the preamble of claim 1.

### Citation List

### Patent Literature

Patent Document 1: Japanese Unexamined Patent Application Publication No. 2004-351995

## Summary of Invention

### Technical Problem

The present invention has been made in view of the above mentioned circumstances and has a major object to provide a pneumatic tire with an enhanced bead portion capable of improving steering stability and suppressing an increase in the number of members for molding a green tire to improve the productivity.

### Solution to Problem

The present invention provides a pneumatic tire including a carcass extending from a tread portion to a bead core of a bead portion through a sidewall portion, a substantially triangular cross-sectional bead apex rubber extending radially outwardly from the bead core in a tapered manner, and a bead reinforcing member wound spirally around the bead apex rubber or a assembly of the bead apex rubber and the bead core, wherein the bead reinforcing member has a thickness equal to or less than 1.5 mm.

### Advantageous Effects of Invention

The pneumatic tire in accordance with the present invention includes the bead reinforcing member that is wound spirally around the bead apex rubber or an assembly of the bead apex rubber and the bead core. Since the bead reinforcing member is integrated with the bead apex rubber or the assembly, the number of tire members for molding a green tire does not increase. Therefore, deterioration of the productivity can be prevented. Furthermore, the bead reinforcing member can adjust its reinforcing effect to the bead portion by changing a spiral pitch for winding. Thus, one kind of bead reinforcing member can be employed in various kind tires, thereby improving the productivity.

Furthermore, the bead reinforcing member can reinforce axially both sides of the bead apex rubber or the assembly. Thus, it can offer significant reinforcing effect to the bead portion with less weight gain, as compared with a conventional bead reinforcing layer as illustrated in FIG. 8. Therefore, the tire can improve steering stability without deteriorating ride comfort.

## Brief Description of Drawings

FIG. 1 is a cross-sectional view of a pneumatic tire in accordance with an embodiment of the present invention.

FIG. 2 is an exploded perspective view of a bead portion of FIG. 1.

FIG. 3 is a perspective view of a bead apex rubber in accordance with an embodiment used for when a green tire is molded.

FIG. 4 is a perspective view of the bead apex rubber in accordance with another embodiment used for when a green tire is molded.

FIG. 5 is a side view of the bead apex rubber in accordance with an embodiment used when a green tire is molded.

FIG. 6 is a perspective view of a bead reinforcement member in accordance an embodiment.

FIG. 7 is a perspective view of the bead reinforcement member in accordance with another embodiment.

FIG. 8 is a cross-sectional view of one example of a conventional pneumatic tire.

## Description of Embodiments

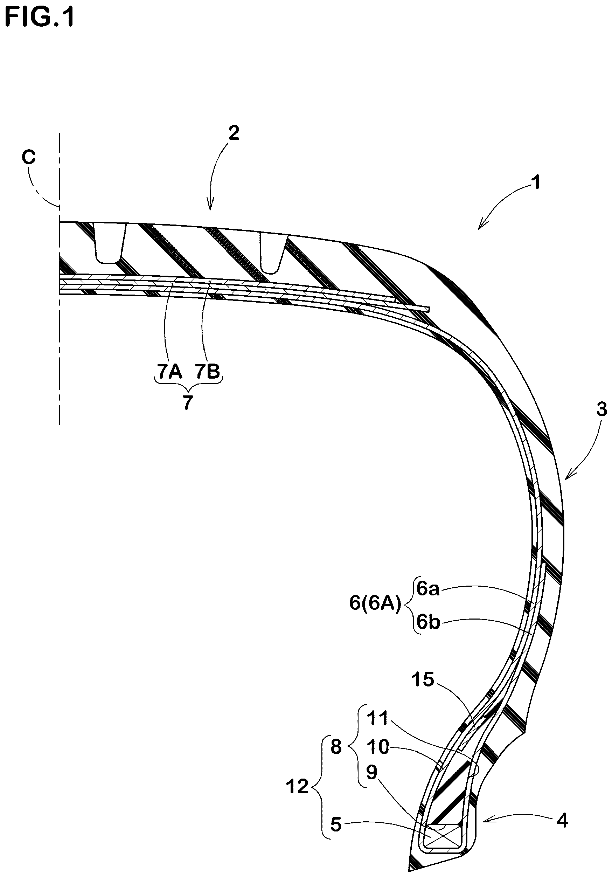

Hereinafter, an embodiment of the present invention will be explained based on the drawings. FIG. 1 illustrates a meridian cross-sectional view including a tire axis of a pneumatic tire (hereinafter, simply referred to as "tire") 1 in accordance with an embodiment under a standard state.

The standard state is such that the tire is mounted on a standard rim (not illustrated) with a standard pressure but is loaded with no tire load. Unless otherwise noted, dimensions of respective portions of the tire are values measured under the standard state.

The standard wheel rim is a wheel rim approved for each tire by standards organizations on which the tire is based, wherein the standard wheel rim is the "standard rim" specified in JATMA, the "Design Rim" in TRA, and the "Measuring Rim" in ETRTO, for example. The standard pressure is a standard pressure approved for each tire by standards organizations on which the tire is based, wherein the standard pressure is the "maximum air pressure" in JATMA, the maximum pressure given in the "Tire Load Limits at Various Cold Inflation Pressures" table in TRA, and the "Inflation Pressure" in ETRTO, for example. When the tire is for passenger cars, the standard pressure is defined as 180 kPa.

As illustrated in FIG. 1, the pneumatic tire 1 in accordance with the present embodiment includes a carcass 6 extending from a tread portion 2 to a bead core 5 of each bead portion 4 through each sidewall portion 3, a bead apex rubber 8 extending radially outwardly from each bead core 5 in a tapered manner and a belt layer 7 disposed radially outward of the carcass 6 in the tread portion 2. In this embodiment, the pneumatic tire 1 is configured as a tire for passenger cars.

The carcass 6 includes a toroidal main portion 6a extending from the tread portion 2 to the bead core 5 of the bead portion 4 through the sidewall portion 3 and a turn-up portion 6b turned up around the bead core 5 from axially inside to the outside of the tire. The carcass 6 includes at least one carcass ply 6A. The carcass ply 6A is a cord ply that includes carcass cords coated with a topping rubber, and the carcass cords are oriented at an angle of from 75 to 90 degrees with respect to the tire equator C, for example. For the carcass cords, an organic fiber cords such as polyester, nylon, rayon and aramid may be suitably employed.

The turn-up portion 6b of the carcass ply 6A extends radially outwardly and terminates beyond an outer end of the bead apex rubber 8 in the radial direction of the tire, for example.

The belt layer 7 includes two belt plies 7A and 7B of belt cords in the radial direction of the tire, wherein the belt cords are oriented at a small angle of from 10 to 40 degrees with respect to the tire equator C. The belt layer 7 is configured by overlapping the belt plies 7A and 7B so that the belt cords of each ply crosses each other.

The bead core 5, for example, has a rectangular shape in the tire meridian section. The bead core 5, for example, is configured as so-called single-winding structure in which a single bead wire is wound in multiple rows and columns, or a tape-bead structure in which a tape-like body of a plurality of bead wires arranged laterally is wound in multiple layers.

The bead apex rubber 8 is disposed between the main portion 6a and the turn-up portion 6b of the carcass 6, and extends radially outwardly from the bead core 5 in a tapered manner so as to have a substantially triangular cross-sectional shape. The bead apex rubber 8 includes a bottom surface 9 facing an radially outer surface of the bead core 5, an inner surface 10 extending radially outwardly from the bottom surface 9 and facing the main portion 6a, and an outer surface 11 extending radially outwardly from the bottom surface 9 and facing the turn-up portion 6b. The bead apex rubber 8, for example, is made of a hard rubber composite having a rubber hardness of from 70 to 90 degrees.

In this description, "rubber hardness" is a type-A durometer hardness according to JIS-K6253 in an environment at 23 deg. C.

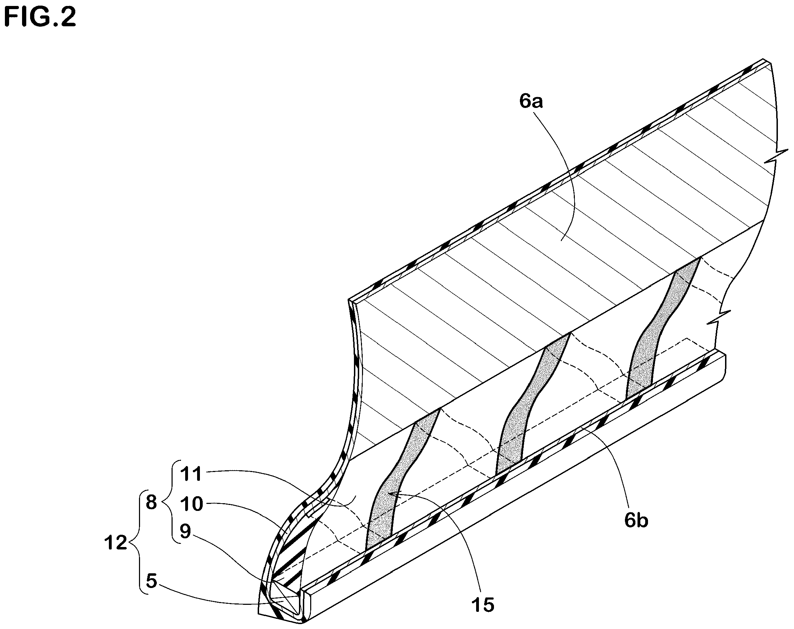

As illustrated in FIG. 2, the pneumatic tire according to the present invention includes a bead reinforcing member

15 wound spirally around the bead apex rubber 8 or a assembly 12 of the bead apex rubber 8 and the bead core 5. The bead reinforcing member 15 according to the embodiment illustrated in FIG. 2 is wound spirally around the bead apex rubber 8 without including the bead core 5.

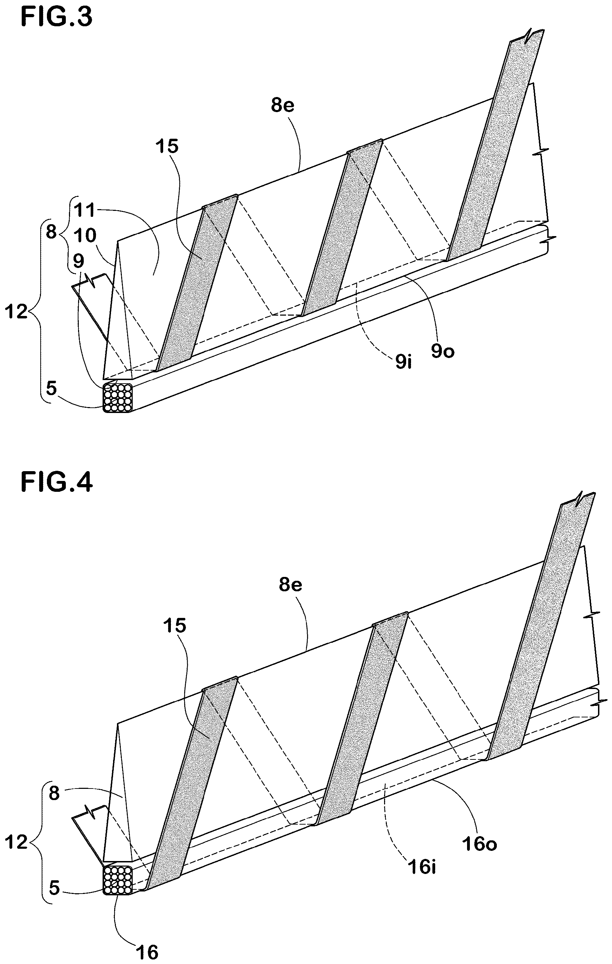

FIG. 3 illustrates a perspective view of the bead apex rubber 8 in accordance with an embodiment before assembling to a green tire. The bead reinforcing member 15 extends in a circumferential direction of the tire while being wound along the outer surface 11, the inner surface 10 and the bottom surface 9 of the bead apex rubber 8. Specifically, the bead reinforcing-member in accordance with the present embodiment forms one spiral pitch by the following portions: a portion extending radially outwardly along the outer surface 11 of the bead apex rubber 8; a portion fold back at the top 8e of the bead apex rubber 8; a portion extending radially inwardly along the inner surface 10 of the bead apex rubber 8; a portion fold back at the axially inner end 9i of the bottom surface 9 of the bead apex 8; a portion extending in the axial direction of the tire along the bottom surface 9; and a portion fold back at the axially outer end 90 of the bottom surface 9.

Furthermore, as illustrated in FIG. 4, the bead reinforcing member 15 may be wound spirally around the assembly 12 of the bead apex rubber 8 and the bead core 5. In this case, the bead reinforcing member 15, for example, forms one spiral pitch by the following portions: a portion extending radially outwardly along the outer surface of the assembly 12; a portion fold back at the top 8e of the bead apex rubber 8; a portion extending radially inwardly along the inner surface of the assembly 12; a portion fold back at the axially inner end 16i of the bottom surface 16 of the bead core 5; a portion extending in the axial direction of the tire along the bottom surface 16 of the bead core; and a portion fold back at the axially outer end 160 of the bottom surface 16 of the bead core 5.

The bead apex rubber 8 or the assembly 12 with the bead reinforcing member 15 wound spirally does not increase the number of members for molding a green tire. Thus, the productivity of the tire can be improved as compared with the conventional bead reinforcing layer (c). Furthermore, the bead reinforcing member 15 can adjust its reinforcing effect to the bead portion by changing a spiral pitch for winding. Thus, one kind of bead reinforcing member 15 can be employed in various kind tires. This makes it possible to lessen a variety of the bead reinforcing members 15 to be stocked, thereby improving the productivity even in small-volume production in great varieties.

Furthermore, the bead reinforcing member 15 can reinforce the bead apex rubber 8 uniformly over the bottom surface 9, the inner surface 10 and the outer surface 11 as a whole. Thus, deformation of the bead apex rubber 8 in various directions can be suppressed in good balance. Thus, it can offer significant reinforcing effect to the bead portion with less weight gain, as compared with a conventional bead reinforcing layer. Therefore, the tire can improve steering stability without deteriorating ride comfort.

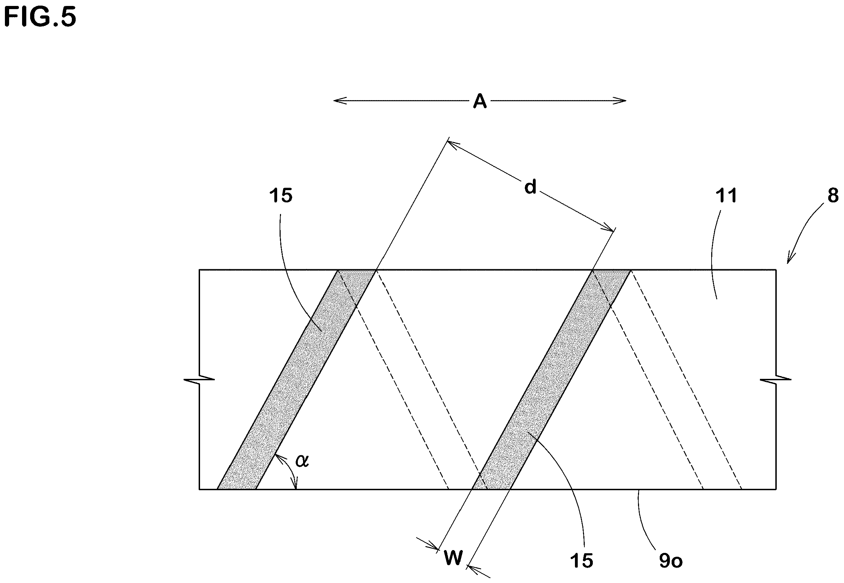

FIG. 5 illustrates a side view of the bead apex rubber 8 viewed from the outer surface 11. As illustrated in FIG. 5, the bead reinforcing member 15 is wound so as to have intervals in the circumferential direction (A) of the tire between turns. When a clearance distance (d) perpendicular to a longitudinal direction of the bead reinforcing member 15 between circumferentially adjacent turns of the bead reinforcing member 15 is excessively small, there is a possibility that the number of turns of the bead reinforcing member 15 increases and that the productivity lowers. On the other hand, when the clearance distance (d) is excessively large, reinforcing effect to the bead portion may lower. Thus, the clearance distance (d) is preferably not less than 10 mm, more preferably not less than 15 mm, but preferably not more than 30 mm, more preferably not more than 25 mm.

When a lead angle $\alpha$ of the bead reinforcing member 15 with respect to the circumferential direction (A) of the tire becomes small, it may be difficult to utilize tensile strength of the bead reinforcing member 15 effectively, and thus the bead reinforcing effect may be lowered. On the other hand, when the lead angle $\alpha$ becomes large, the number of turns of the bead reinforcing member 15 increases, and thus the productivity may be lowered. In view of the above, the lead angle $\alpha$ is preferably in a range of not less than 30 degrees, more preferably not less than 45 degrees, but preferably in a range of not more than 85 degrees more preferably not more than 80 degrees.

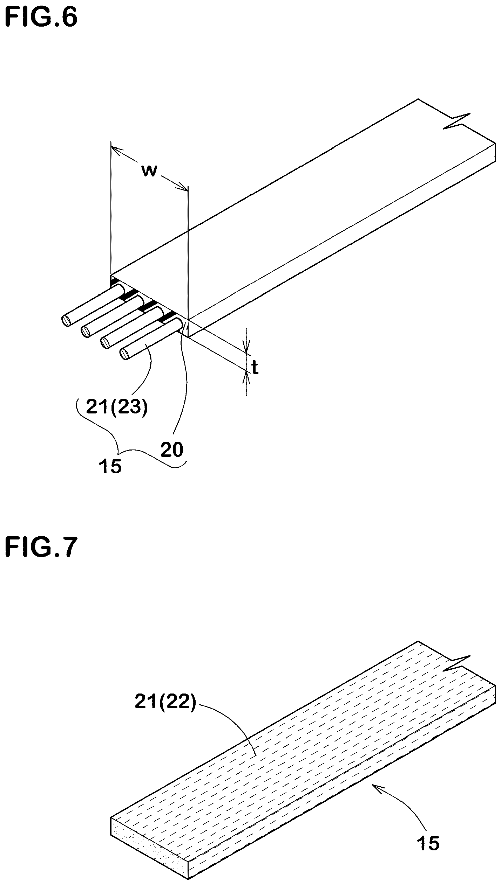

As illustrated in FIG. 6, the bead reinforcing member 15 in accordance with the present embodiment has a substantially flat rectangular cross-sectional shape with a constant width w and thickness t, and extends in its longitudinal direction.

When the width w of the bead reinforcing member 15 becomes small, the number of turns thereof around the bead apex rubber 8 or the assembly 12 increases, and thus the productivity may be lowered. On the other hand, when the width w becomes large, uniformity of the tire may be lowered. Accordingly, the width w of the bead reinforcing member 15 is preferably in a range of from not less than 3 mm, more preferably not less than 8 mm, and preferably in a range of from not more than 30 mm, more preferably not more than 25 mm.

When the thickness t of the bead reinforcing member 15 becomes large, a stepped portion may be formed on a surface of the bead apex rubber 8 or the assembly 12 and thus remaining air in the stepped portion may cause molding failure. On the other hand, when the thickness t of the bead reinforcing member 15 becomes small, the bead reinforcing effect may not be obtained. Accordingly, the thickness t of the bead reinforcing member 15 is in a range of from not more than 1.5 mm, preferably not more than 1.2 mm, and preferably not less than 0.5 mm, more preferably not less than 0.8 mm.

The bead reinforcing member 15 includes a primary material 20 and a secondary material 21 disposed within the primary material 20 for reinforcing the primary material 20.

In this embodiment, the primary material 20, for example, is rubber, and is preferably a topping rubber softer than the bead apex rubber. More preferably, the topping rubber having a rubber hardness of from 40 to 60 degrees may be used. The primary material 20 is not limited to rubber, but may employ a plastic film and the like, for example.

In this embodiment, the secondary material 21 is cord elements 23 extending in parallel with each other along the longitudinal direction. The secondary material 21 improves the tensile strength of the primary material 20 along the longitudinal direction so that the bead apex rubber 8 or the assembly 12 is effectively reinforced.

For the cord elements 23 according to the embodiment, an organic fiber cord such as nylon, PET, PEN, aromatic polyamide can be suitably employed, for example. One with a large tensile strength is preferable as for the cord elements 23. For example, force L for stretching a single cord element at 2% is preferably not less than 30 N, more preferably not less than 50 N.

When the total fineness f of each cord element 23 becomes small, the bead reinforcing effect may be lowered. When the total fineness f of each cord element 23 becomes large, it may be difficult to wind to the bead apex rubber 8 and the like. Thus, the total fineness of the cord element 23 is preferably not less than 1300 dtex, more preferably not less than 1400 dtex, and preferably not more than 1800 dtex, more preferably not more than 1700 dtex.

In the same point of view, the number B of cord elements disposed in the bead reinforcing member 15 is preferably not less than six, more preferably not less than eight, and preferably not more than 14, more preferably not more than 12. Furthermore, the cord ends E in which the number of cord elements per 5 cm width of the bead reinforcing member 15, for example, is set in a range of from 40 to 60 (cords/5cm).

The bead reinforcing effect of the bead reinforcing member 15 varies based on not only the number or fineness of the cord elements 23 disposed in the bead reinforcing member 15, but also the winding pitch and the lead angle $\alpha$ of the bead reinforcing member 15. The bead reinforcing effect is quantified as the strength index F represented by the following formula (1):

$$F = L \times (50 \times n / (d + w)) \times \sin \alpha \qquad (1).$$

where L is force (N) for stretching a single cord element at 2%, n (cords) is the number of the cord elements disposed in the bead reinforcing member, d (mm) is a clearance distance perpendicular to the longitudinal direction of the bead reinforcing member 15 between circumferentially adjacent turns of the bead reinforcing member 15 on the side as illustrated in FIG. 5, w (mm) is a width of the bead reinforcing member 15, and $\alpha$ (degree) is a lead angle of the bead reinforcing member 15 with respect to the circumferential direction of the tire.

The strength index F is the product of the number of cord elements per 5 cm width of a total region that includes a portion in which the cord elements are disposed and a portion in which the cord elements are not disposed (= 50 x n / (d + w)), the force L for stretching a single cord element at 2% and the value of sin $\alpha$. With this, the bead reinforcing effect of the bead reinforcing member 15 to the bead apex rubber 8 or the assembly 12 can be quantified. That is, it is possible to compare the difference between two types of bead reinforcing effect using the strength indexes F even in a different winding situation where the clearance distance d and the lead angle are different.

When the strength index F becomes small, it may be difficult to obtain sufficient bead reinforcing effect. On the other hand, the strength index F becomes large, ride comfort of the tire may be deteriorated due to the excessively large rigidity. From this point of view, the strength index F is preferably not less than 300, more preferably not less than 800, and more preferably not more than 2500, more preferably not more than 2000.

The secondary material 21 is not particularly limited to the cord elements 23, but may employ a sheet-like textile made of inorganic or organic fibers. For the textile, for example, carbon fibers are preferably used.

As illustrated in FIG. 7, the secondary material 21 can be a short fiber extending in the longitudinal direction. For the short fiber, nylon, polyester, aramid, rayon, vinylon, aromatic polyamide, cotton, cellulose resin and the like may be employed. The short fiber 22 is preferably has a length of about 100 to 800 $\mu$m. Such a bead reinforcing member 15 with the short fiber 22 may reduce the weight and improve the fuel efficiency, since it does not include the cord elements.

While preferred embodiments in accordance with the present invention have been described in detail, the present invention is not limited to the illustrated embodiments, but can be modified and carried out in various aspects.

**Example**

Pneumatic tire (195/65R15) for passenger cars having a basic structure illustrated in FIG. 1 with the bead reinforcing member wound in the aspect illustrated in FIG. 3 and FIG. 4 were manufactured. As for comparative examples, a pneumatic tire (Ref. 1) that does not include a bead reinforcing layer nor the bead reinforcing member as well as pneumatic tires (Ref. 2 and Ref. 3) having the bead reinforcing layer as illustrated in FIG. 8 were also manufactured. Then, steering stability, ride comfort and defect rate in production of each test tire was tested. The test procedures are as follows.

Steering stability and ride comfort:

Each test tire was mounted on a test vehicle under the following condition, and then a test driver drove the test vehicle on a dry asphalt road of a test course to check the steering stability and ride comfort by his feeling. The test result are indicated using score in maximum 100, wherein the score of steering stability and ride comfort of Ex. 1 are set at 75 points. The larger the value, the better the performance is.

Rim: 15x6JJ
Internal pressure: 200 kPa
Test vehicle: Japanese passenger car with 2,000cc displacement
Tire installing location: All the wheels

Defect rate in production:

Defective rate of air-remaining defectiveness in a bead portion at the time of producing 200 tires was measured. The test result is indicated as a ratio of the number of defective tires for production number. The larger the value, the greater the defective rate is.
The test result are shown in Table 1.

[Table 1]

(1/2)

| | Ref. 1 | Ref. 2 | Ref. 3 | Ex. 1 | Ex. 2 | Ex. 3 | Ex. 4 | Ex. 5 | Ex. 6 | Ex. 7 | Ex. 8 | Ex. 9 |
|---|---|---|---|---|---|---|---|---|---|---|---|---|
| Figure illustrating bead reinforcing layer of bead reinforcing material | - | FIG. 8 (*1) | FIG. 8 (*2) | FIG. 3 | FIG. 3 | FIG. 3 | FIG. 3 | FIG. 3 | FIG. 3 | FIG. 3 | FIG. 3 | FIG. 3 |
| Primary material of bead reinforcing material | - | - | - | Topping rubber | Topping rubber | Topping rubber | Topping rubber | Topping rubber | Topping rubber | Topping rubber | Topping rubber | Topping rubber |
| Secondary material of bead reinforcing material | - | - | - | PET cord | PEN cord | Nylon cord | Aromatic polyamide cord | Aromatic polyamide cord | Aromatic polyamide cord | Aromatic polyamide cord | Aromatic polyamide cord | Aromatic polyamide cord |
| Width w of bead reinforcing member (mm) | - | - | - | 10.0 | 10.0 | 10.0 | 10.0 | 10.0 | 10.0 | 10.0 | 10.0 | 10.0 |
| Thickness t of bead reinforcing member (mm) | - | - | - | 1.1 | 1.1 | 1.1 | 1.1 | 1.1 | 1.1 | 1.1 | 1.1 | 1.8 |
| Clearance distance d (mm) | - | - | - | 23.8 | 23.8 | 23.8 | 23.8 | 62.5 | 55.5 | 10.7 | 3.9 | 23.8 |

(continued)

| (1/2) | Ref. 1 | Ref. 2 | Ref. 3 | Ex. 1 | Ex. 2 | Ex. 3 | Ex. 4 | Ex. 5 | Ex. 6 | Ex. 7 | Ex. 8 | Ex. 9 |
|---|---|---|---|---|---|---|---|---|---|---|---|---|
| Lead angle α of bead reinforcing member (deg.) | - | - | - | 65.0 | 65.0 | 65.0 | 65.0 | 25.0 | 35.0 | 75.0 | 80.0 | 65.0 |
| Number n of cord elements in bead reinforcing member (cords) | - | - | - | 10 | 10 | 10 | 10 | 10 | 10 | 10 | 10 | 10 |
| Total fineness f of cord element (dtex) | - | - | - | 1670 | 1670 | 1400 | 1670 | 1670 | 1670 | 1670 | 1670 | 1670 |
| Force L for stretching cord element at 2% (N) | - | - | - | 27.0 | 35.0 | 12.0 | 66.0 | 66.0 | 66.0 | 66.0 | 66.0 | 66.0 |
| Strength index F | - | - | - | 362 | 469.2 | 160.9 | 884.9 | 192.4 | 289 | 1539.9 | 2338 | 884.9 |
| Steering stability (Score) | 45 | 60 | 65 | 75 | 75 | 70 | 80 | 70 | 70 | 85 | 90 | 80 |
| Ride comfort (Score) | 80 | 55 | 60 | 75 | 75 | 80 | 70 | 80 | 75 | 65 | 60 | 70 |

EP 3 078 509 B1

8

(continued)

(1/2)

| | Ref. 1 | Ref. 2 | Ref. 3 | Ex. 1 | Ex. 2 | Ex. 3 | Ex. 4 | Ex. 5 | Ex. 6 | Ex. 7 | Ex. 8 | Ex. 9 |
|---|---|---|---|---|---|---|---|---|---|---|---|---|
| Defect rate (%) | 0 | 0 | 0 | 0 | 0 | 0 | 0 | 0 | 0 | 0 | 0 | 3.5 |

(2/2)

| | Ex. 10 | Ex. 11 | Ex. 12 | Ex. 13 | Ex. 14 | Ex. 15 | Ex. 16 | Ex. 17 | Ex. 18 | Ex. 19 | Ex. 20 |
|---|---|---|---|---|---|---|---|---|---|---|---|
| Figure illustrating bead reinforcing layer of bead reinforcing material | FIG. 3 | FIG. 3 | FIG. 3 | FIG. 3 | FIG. 4 | FIG. 4 | FIG. 4 | FIG. 4 | FIG. 4 | FIG. 3 | FIG. 3 |
| Primary material of bead reinforcing material | Topping rubber | Topping rubber | Topping rubber | Topping rubber | Topping rubber | Topping rubber | Topping rubber | Topping rubber | Topping rubber | Nylon film | Nylon film |
| Secondary material of bead reinforcing material | Aromatic polyamide cord | Aromatic polyamide cord | Aromatic polyamide cord | Aromatic polyamide cord | Aromatic polyamide cord | Aromatic polyamide cord | Aromatic polyamide cord | Aromatic polyamide cord | Aromatic polyamide cord | Short fiber | Carbon fiber textile |
| Width w of bead reinforcing member (mm) | 4.0 | 18.0 | 28.0 | 32.0 | 10.0 | 10.0 | 10.0 | 10.0 | 10.0 | 10.0 | 10.0 |

EP 3 078 509 B1

(continued)

| (2/2) | Ex. 10 | Ex. 11 | Ex. 12 | Ex. 13 | Ex. 14 | Ex. 15 | Ex. 16 | Ex. 17 | Ex. 18 | Ex. 19 | Ex. 20 |
|---|---|---|---|---|---|---|---|---|---|---|---|
| Thickness t of bead reinforcing member (mm) | 1.1 | 1.1 | 1.1 | 1.1 | 1.1 | 1.1 | 1.1 | 1.1 | 1.1 | 1.1 | 1.1 |
| Clearance distance d (mm) | 29.8 | 15.8 | 5.8 | 1.8 | 32.3 | 62.5 | 55.5 | 10.7 | 3.9 | 23.8 | 23.8 |
| Lead angle $\alpha$ of bead reinforcing member (deg.) | 65.0 | 65.0 | 65.0 | 65.0 | 65.0 | 25.0 | 35.0 | 75.0 | 80.0 | 65.0 | 65.0 |
| Number n of cord elements in bead reinforcing member (cords) | 4 | 18 | 28 | 32 | 10 | 10 | 10 | 10 | 10 | - | - |
| Total fineness f of cord element (dtex) | 1670 | 1670 | 1670 | 1670 | 1670 | 1670 | 1670 | 1670 | 1670 | - | - |
| Force L for stretching cord element at 2% (N) | 66.0 | 66.0 | 66.0 | 66.0 | 66.0 | 66.0 | 66.0 | 66.0 | 66.0 | - | - |
| Strength index F | 353.9 | 1592.7 | 2477.6 | 2831.5 | 707 | 192.4 | 289 | 1539.9 | 2338 | - | - |

EP 3 078 509 B1

(continued)

| (2/2) | | | | | | | | | | | |
|---|---|---|---|---|---|---|---|---|---|---|---|
| | Ex. 10 | Ex. 11 | Ex. 12 | Ex. 13 | Ex. 14 | Ex. 15 | Ex. 16 | Ex. 17 | Ex. 18 | Ex. 19 | Ex. 20 |
| Steering stability (Score) | 70 | 80 | 85 | 90 | 80 | 85 | 85 | 90 | 95 | 80 | 85 |
| Ride comfort (Score) | 80 | 65 | 60 | 55 | 70 | 80 | 80 | 65 | 60 | 75 | 75 |
| Defect rate (%) | 0 | 0 | 0 | 0 | 0 | 0 | 0 | 0 | 0 | 0 | 0 |
| *1 Bead reinforcing layer of Ref. 2 is a ply of cord with tipping rubber, wherein the cord is employed nylon cord of a 1400dtex/2 fineness with ends of 50 (cords / 5cm) *2: Bead reinforcing layer of Ref. 3 is a rubber layer having rubber hardness of 90 degrees with no cords. | | | | | | | | | | | |

From the test results, it is confirmed that the example tires improve the steering stability and ride comfort as compared with the references.

**Reference Signs List**

| 1 | Pneumatic tire |
|---|---|
| 2 | Tread portion |
| 3 | Sidewall portion |
| 4 | Bead portion |
| 5 | Bead core |
| 6 | Carcass |
| 8 | Bead apex rubber |
| 12 | Assembly |
| 15 | Bead reinforcing member |

**Claims**

1. A pneumatic tire (1) comprising:

   a carcass (6) extending from a tread portion (2) to a bead core (5) of a bead portion (4) through a sidewall portion (3);
   a substantially triangular cross-sectional bead apex rubber (8) extending radially outwardly from the bead core (5) in a tapered manner; and
   a bead reinforcing member (15) wound spirally around the bead apex rubber (8) or an assembly (12) of the bead apex rubber (8) and the bead core (5),

   **characterized in that** the bead reinforcing member (15) has a thickness (t) equal to or less than 1.5 mm.

2. The pneumatic tire (1) according to claim 1,
   wherein the bead reinforcing member (15) is wound around the bead apex rubber (8) without including the bead core (5).

3. The pneumatic tire (1) according to claim 1,
   wherein the bead reinforcing member (15) is wound around the assembly (12).

4. The pneumatic tire (1) according to any one of claims 1 to 3,
   wherein the bead reinforcing member (15) is wound with a lead angle $\alpha$ of from 30 to 85 degrees with respect to a circumferential direction of the tire.

5. The pneumatic tire (1) according to any one of claims 1 to 4,
   wherein the bead reinforcing member (15) has a width (w) of from 3 to 30 mm perpendicular to its longitudinal direction.

6. The pneumatic tire (1) according to any one of claims 1 to 5,
   wherein the bead reinforcing member (15) comprises a cord element (23) extending in a longitudinal direction.

7. The pneumatic tire (1) according to claim 6,
   wherein the bead reinforcing member (15) has a strength index F represented by the following formula (1) in a range of from 300 to 2500, at one side of the bead apex rubber (8) in an axial direction of the tire (1),

   $$F = L \times (50 \times n / (d + w)) \times \sin \alpha \qquad (1);$$

   where L is force (N) for stretching a single cord element at 2%, n (cords) is the number of the cord element (23) disposed in the bead reinforcing member, d (mm) is a clearance distance perpendicular to a longitudinal direction of the bead reinforcing member (15) between circumferentially adjacent turns of the bead reinforcing member (15) on the side, w (mm) is a width of the bead reinforcing member (15), and $\alpha$ (degree) is an angle of the bead reinforcing member (15) with respect to a circumferential direction of the tire (1).

**Patentansprüche**

1. Luftreifen (1), umfassend:

   eine Karkasse (6), die sich von einem Laufflächenabschnitt (2) zu einem Wulstkern (5) eines Wulstabschnitts (4) durch einen Seitenwandabschnitt (3) erstreckt;
   einen Wulstkernreiterkautschuk (8) mit einem im Wesentlichen dreieckigen Querschnitt, der sich von dem Wulstkern (5) auf eine sich verjüngende Weise radial nach außen erstreckt; und
   ein Wulstverstärkungselement (15), das spiralförmig um den Wulstkernreiterkautschuk (8) oder eine Anordnung (12) aus dem Wulstkernreiterkautschuk (8) und dem Wulstkern (5) herumgewickelt ist,

   **dadurch gekennzeichnet, dass** das Wulstverstärkungselement (15) eine Dicke (t) von gleich oder kleiner als 1,5 mm aufweist.

2. Luftreifen (1) nach Anspruch 1, wobei das Wulstverstärkungselement (15) um den Wulstkernreiterkautschuk (8) herumgewickelt ist, ohne den Wulstkern (5) einzuschließen.

3. Luftreifen (1) nach Anspruch 1, wobei das Wulstverstärkungselement (15) um die Anordnung (12) herumgewickelt ist.

4. Luftreifen (1) nach einem der Ansprüche 1 bis 3, wobei das Wulstverstärkungselement (15) mit einem Steigungswinkel $\alpha$ von 30 bis 85 Grad mit Bezug auf eine Umfangsrichtung des Reifens gewickelt ist.

5. Luftreifen (1) nach einem der Ansprüche 1 bis 4, wobei das Wulstverstärkungselement (15) eine Breite (w) von 3 bis 30 mm senkrecht zu seiner Längsrichtung aufweist.

6. Luftreifen (1) nach einem der Ansprüche 1 bis 5, wobei das Wulstverstärkungselement (15) ein Kordelement (23) umfasst, das sich in einer Längsrichtung erstreckt.

7. Luftreifen (1) nach Anspruch 6, wobei das Wulstverstärkungselement (15) einen durch die folgende Formel (1) dargestellten Festigkeitsindex F in einem Bereich von 300 bis 2500 auf einer Seite des Wulstkernreiterkautschuks (8) in einer axialen Richtung des Reifens (1) aufweist,

$$F = L \times (50 \times n / (d + w)) \times \sin \alpha \qquad (1);$$

   wobei L die Kraft (N) zum Strecken eines einzelnen Kordelements bei 2% ist, n (Korde) die Zahl der in dem Wulstverstärkungselement angeordneten Kordelemente (23) ist, d (mm) ein Zwischenraumabstand senkrecht zu einer Längsrichtung des Wulstverstärkungselements (15) zwischen in Umfangsrichtung benachbarten Windungen des Wulstverstärkungselements (15) auf der Seite ist, w (mm) eine Breite des Wulstverstärkungselements (15) ist, und $\alpha$ (Grad) ein Winkel des Wulstverstärkungselements (15) mit Bezug auf eine Umfangsrichtung des Reifens (1) ist.

**Revendications**

1. Bandage pneumatique (1) comprenant :

   une carcasse (6) s'étendant depuis une portion formant bande de roulement (2) jusqu'à une âme de talon (5) d'une portion de talon (4) à travers une portion formant paroi latérale (3) ;
   un caoutchouc de coiffe de talon (8) à section transversale sensiblement triangulaire, s'étendant radialement vers l'extérieur depuis l'âme de talon (5) d'une manière effilée ; et
   un élément de renfort de talon (15) enroulé en spirale autour du caoutchouc de coiffe de talon (8) ou d'un assemblage (12) formé du caoutchouc de coiffe de talon (8) et de l'âme de talon (5),

EP 3 078 509 B1

**caractérisé en ce que** l'élément de renfort de talon (15) a une épaisseur (t) égale ou inférieure à 1,5 mm.

2.  Bandage pneumatique (1) selon la revendication 1,
    dans lequel l'élément de renfort de talon (15) est enroulé autour du caoutchouc de coiffe de talon (8) sans inclure l'âme de talon (5).

3.  Bandage pneumatique (1) selon la revendication 1,
    dans lequel l'élément de renfort de talon (15) est enroulé autour de l'assemblage (12).

4.  Bandage pneumatique (1) selon l'une quelconque des revendications 1 à 3,
    dans lequel l'élément de renfort de talon (15) est enroulé avec un angle $\alpha$ de 30 à 85° par rapport à une direction circonférentielle du pneumatique.

5.  Bandage pneumatique (1) selon l'une quelconque des revendications 1 à 4, dans lequel l'élément de renfort de talon (15) a une largeur (w) de 3 à 30 mm perpendiculairement à sa direction longitudinale.

6.  Bandage pneumatique (1) selon l'une quelconque des revendications 1 à 5,
    dans lequel l'élément de renfort de talon (15) comprend un élément de câblé (23) s'étendant dans une direction longitudinale.

7.  Bandage pneumatique (1) selon la revendication 6,
    dans lequel l'élément de renfort de talon (15) présente un indice de résistance F, représenté par la formule suivante (1), dans une plage de 300 à 2500, sur un côté du caoutchouc de coiffe de talon (8) dans une direction axiale du pneumatique (1),

$$F = L \times (50 \times n/(d + w)) \times \sin \alpha \quad (1) ;$$

    dans laquelle L est la force (N) pour étirer un élément de câblé unique à 2 %, n (câblés) est le nombre d'éléments de câblés (23) disposés dans l'élément de renfort de talon, d (mm) est une distance de dégagement perpendiculaire à une direction longitudinale de l'élément de renfort de talon (15) entre des spires circonférentiellement adjacentes de l'élément de renfort de talon (15) sur le côté, w (mm) est une largeur de l'élément de renfort de talon (15), et $\alpha$ (degrés) est un angle de l'élément de renfort de talon (15) par rapport à une direction circonférentielle du pneumatique (1).

14

# FIG.1

EP 3 078 509 B1

# FIG.2

6a

6b

11
10
9

8

12

5

15

**FIG.3**

**FIG.4**

**FIG.5**

# FIG.6

w

t

21(23)

20

15

# FIG.7

21(22)

15

**FIG.8**

**EP 3 078 509 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006213180 A
- JP 2007001388 A
- JP 2004351995 A